# EUROPEAN PATENT APPLICATION

(11) **EP 3 168 807 A1**
(43) Date of publication of application: **17.05.2017**
(21) Application number: 15819426.6
(22) Date of filing: 09.06.2015
(51) Int. Cl.: G06Q 50/06

(54) **POWER SUPPLY CONTROL APPARATUS, POWER SUPPLY CONTROL SYSTEM, AND PROGRAM**

(30) Priority: 07.07.2014 JP 2014139859
(71) Applicant: Panasonic Intellectual Property Management Co., Ltd., Osaka-shi, Osaka 570-6207 (JP)
(72) Inventor: FUJITA, Tomohiko, Osaka-shi, Osaka 540-6207 (JP); SHIMIZU, Noriyoshi, Osaka-shi, Osaka 540-6207 (JP); NAKAHARA, Tomoharu, Osaka-shi, Osaka 540-6207 (JP); NISHIYAMA, Takashi, Osaka-shi, Osaka 540-6207 (JP)
(74) Representative: Appelt, Christian W.
(86) International application number: PCT/JP2015/002873
(87) International publication number: WO 2016/006161

(57) **Abstract**

In order to reduce demand power on utility grid through electrical energy storage and suppress reduction in remaining capacity of electrical energy storage, power supply control apparatus (10) includes judging module (12) and estimator (13). Judging module (12) judges whether to allow electrical energy storage (20) to feed power into electrical load (41) within target period while electrical energy storage (20) in building (40) is requested to feed power into electrical load (41). Estimator (13) performs estimation of present state in which user of electrical load (41) is present in building (40) or absent state in which user is absent from building (40). Judging module (12) judges to allow electrical energy storage (20) to feed power when estimation by estimator (13) is present state, within target period and judges to prohibit electrical energy storage (20) from feeding power when estimation by estimator (13) is absent state, within target period.

## Description

### Technical Field

The invention relates to a power supply control apparatus configured to control whether or not to allow an electrical energy storage installed in a building to feed its own power into an electrical load, a power supply control system configured to control whether or not to allow an electrical energy storage installed in a building to feed its own power into an electrical load, and a program for allowing a computer to function as the power supply control apparatus.

### Background Art

In a related technology, it has been proposed to classify consumer premises into groups based on their respective demand electric energy patterns and to control a group corresponding to demand tightness by a restriction instruction (e.g., Document 1 "JP 2013-240154 A"). In the configuration described in Document 1, a charge discharge instruction module of a charging amount controller provides an electricity storage facility with a charge instruction and a discharge instruction.

The technology described in Document 1 allows the electricity storage facility to charge and discharge in accordance with the charge instruction and the discharge instruction, respectively. Demand power can be therefore smoothed by feeding power from the electricity storage facility according to supply power tightness, for example. Note that Document 1 describes the configuration in which the electricity storage facility is installed in a grid but does not consider respective electrical energy storages installed in individual consumer premises.

### Summary of Invention

It is an object of the present invention to provide a power supply control apparatus and a power supply control system, capable of suppressing reduction in demand power on a utility grid through an electrical energy storage and reduction in remaining capacity of the electrical energy storage. It is also an object of the present invention to provide a program for allowing a computer to function as the power supply control apparatus.

A power supply control apparatus in accordance with the present invention includes an estimator and a judging module. The estimator is configured to perform estimation of a present state in which a user of an electrical load is present in a building and estimation of an absent state in which the user is absent from the building. The judging module is configured to judge whether or not to allow an electrical energy storage in the building to feed its own power into the electrical load within a target period while the electrical energy storage is requested to feed the power into the electrical load. The judging module is being configured: to judge to allow the electrical energy storage to feed the power when the present state is derived from the estimation by the estimator within the target period; and to judge to prohibit the electrical energy storage from feeding the power when the absent state is derived from the estimation by the estimator within the target period.

A power supply control system in accordance with the present invention includes: individual management devices each of which is disposed in a building; and a centralized management device having a function configured to communicate with the individual management devices and designate a target period. Each of the individual management devices includes the power supply control apparatus.

Another power supply control system in accordance with the present invention includes individual management devices and a centralized management device. Each of the individual management devices is disposed in a building. Each of the individual management devices includes an acquirer configured to acquire power consumption values from a corresponding measuring device configured to measure power consumption in a corresponding building. The centralized management device is configured to communicate with the individual management devices. The centralized management device includes an estimator and a judging module. The estimator is configured to, based on the power consumption values acquired with each acquirer, perform estimation of a present state in which a user of a corresponding electrical load is present in a corresponding building and estimation of an absent state in which the user is absent from the building. The judging module is configured to, within a target period while respective electrical energy storages in the buildings are requested to feed their own power into respective corresponding electrical loads, judge whether or not to allow the respective electrical energy storages to feed their own power into the respective corresponding electrical loads. The judging module is configured: to, when the present state is derived from the estimation by the estimator within the target period, judge to allow one or more corresponding electrical energy storages to feed their own power; and to, when the absent state is derived from the estimation by the estimator within the target period, judge to prohibit one or more corresponding electrical energy storages from feeding their own power.

A program in accordance with the present invention is a program allowing a computer to function as the power supply control apparatus.

With the configuration of the present invention, the electrical energy storage does not feed power into the electrical load in an absent state when a user(s) of the electrical load is not present in the building, even when it is in a target period while the electrical energy storage is requested to feed power into the electrical load. Therefore, when the electrical load in a building is in the absent state and has a small power consumption value, the electrical energy storage is not operated, and it is thereby possible to suppress reduction in remaining capacity of the electrical energy storage. On the other hand, when the electrical load in the building is in a present state and has a large power consumption value, the electrical energy storage is operated, and it is thereby possible to reduce demand power on a utility grid by the peak cut of the demand power.

### Brief Description of Drawings

FIG. 1 is a block diagram showing Embodiment 1;
FIG. 2 illustrates the relationship between user's behavior and power consumption in Embodiment 1;
FIG. 3 illustrates prior probabilities in Embodiment 1;
FIG. 4 illustrates first conditional probabilities in Embodiment 1;
FIG. 5 illustrates a second conditional probability in Embodiment 1;
FIG. 6 illustrates a Bayesian network in Embodiment 1; and
FIG. 7 is a block diagram showing Embodiment 2.

### Description of Embodiments

In an example of the embodiment to be explained below, a building is a detached house, and an electrical energy storage is installed in each building. In case a building is an apartment, an office building, a commercial building or the like and the building dwellers are contractors to purchase electricity from a utility grid, an electrical energy storage may be provided for each of the contractors or shared among the contractors in the building. In case the contractors in the building are provided with respective electrical energy storages, the building means respective occupancy spaces of the contractors. For example, the building is a dwelling unit in the case of the apartment, and also a tenant in the case of the office building or the commercial building.

The electrical energy storage includes a storage battery, a power converter that allows the storage battery to charge and discharge, and a controller configured to control charging timing and discharging timing of the storage battery. The storage battery may be charged by (electric) power received from the utility grid. Note that the storage battery may be charged by power generated through a dispersed power supply configured to generate renewable energy such as a photovoltaic power system or a wind turbine generator system, if such a dispersed power supply is provided. The electrical energy storage is not limited to the installation in which it is installed in the building, but may be contained in an electric drive vehicle equipped with a storage battery, such as an electric vehicle or a hybrid electric vehicle.

In order to feed power to an electrical load in the building, the electrical energy storage may be electrically connected to an indoor electrical circuit for feeding its own power into the electrical load in the building. The contractors are provided with their own distribution boards in general. In this case, the electrical energy storage may be electrically connected to a main circuit in the distribution board in order to distribute power of the electrical energy storage among every electrical load in the building. In case the contractors are in the building such as the apartment or the office building, the electrical energy storage may be electrically connected to an electrical circuit between a connecting point (a network connection point) with the utility grid and an electricity meter provided for each of the contractors.

Note that because the electric energy to be supplied from the electrical energy storage is finite, it is desirable that the electrical energy storage feed its own power into not every electrical load in the building but only a specified electrical load. In a configuration example of the embodiment to be explained below, the electrical energy storage is to feed its own power into the specified electrical load. In this example, the building is a detached house. Therefore, in the embodiment below, a user of the electrical load is called a "dweller", a state in which the user is present in the building is called a "staying state", and a state in which the user is absent from the building is called a "going-out state".

In an example of the embodiment to be explained, the electrical energy storage is to feed the power into the electrical load in order to prevent the shortage of supply power to be supplied to the utility grid with respect to demand power to be consumed by the electrical load. That is, in the embodiment, the electrical energy storage is operated so as to prevent the shortage of the supply power by suppressing the demand power. The electrical energy storage is therefore configured to, when being requested to reduce electric energy to be received in the building, feed the power into the electrical load in the building. Hereinafter, charging of the storage battery is not described in particular.

### (Embodiment 1)

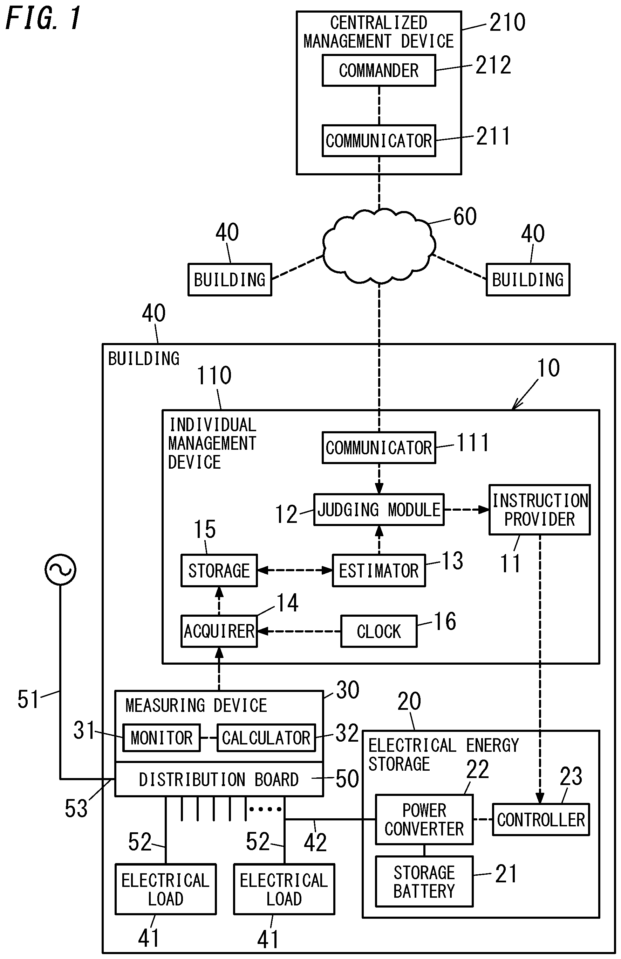

As shown in FIG. 1, the embodiment includes an individual management device(s) 110 and a centralized management device 210. In the embodiment, a power supply control apparatus 10 corresponds to the individual management device 110. The individual management device 110 is disposed in a building 40 with an electrical energy storage 20, while the centralized management device 210 is managed by an electric utility or a service provider. The individual management device 110 includes a communicator 111, and the centralized management device 210 includes a communicator 211. Each of the communicators 111 and 121 is configured to communicate via a telecommunications network 60 such as the Internet or a dedicated network. The centralized management device 210 includes a commander 212, and is configured to request the individual management device 110 to allow the electrical energy storage 20 to feed the power if need be. Such a request is given to a judging module 12 to be described later via the communicators 111 and 121.

The individual management device 110 may be realized as a function of, for example part of a controller for a HEMS (Home Energy Management System). This sort of controller includes a processor configured to operate in accordance with a program(s), and an interface configured to transmit and receive data with respect to the electrical energy storage 20 and a measuring device 30 to be described later. It is therefore possible to allow the controller to function as the individual management device 110 by providing the controller with a program for realizing functions to be explained below. Note that allowing the controller for the HEMS to function as the individual management device 110 is just an example. Accordingly, the individual management device 110 may be a dedicated device with a processor.

The program for allowing a computer to function as the individual management device 110 may be stored in a ROM (Read Only Memory), or provided through a computer readable medium. The program may be also provided via a telecommunications network such as the Internet.

The building 40 may be provided with the electrical energy storage 20 and a distribution board 50 besides the power supply control apparatus 10 as the individual management device 110. The power received from a utility grid 51 may be transmitted to each of branch circuits 52 in the distribution board 50 and fed into an electrical load 41 connected to a branch circuit 52. The distribution board 50 includes a main breaker and branch breakers. The branch circuits 52 are provided for respective branch breakers.

As stated above, the electrical energy storage 20 includes a storage battery 21, a power converter 22 and a controller 23. The electrical energy storage 20 is connected to an indoor electrical circuit 42 in the building 40 and configured to feed its own power into the electrical load 41 in the building 40. The indoor electrical circuit 42 includes an indoor main circuit 53 on a primary side of the main breaker, the branch circuits 52 on respective secondary sides of the branch breakers, and an electrical circuit between the main breaker and the branch breakers. That is, the electrical energy storage 20 can be connected to any electrical circuit of the indoor main circuit 53, a branch circuit 52, and the electrical circuit between the main breaker and the branch breakers.

In case the electrical energy storage 20 has comparatively large output power and the storage battery 21 in the electrical energy storage 20 has comparatively large capacity, the electrical energy storage 20 may feed the power into every electrical load 41 in the building 40. Note that in the embodiment the electrical energy storage 20 is configured to feed the power into a specified electrical load 41. The electrical energy storage 20 is therefore connected to a specified branch circuit 52 that is electrically separated from other branch circuits 52 over a time period while the electrical energy storage 20 is feeding the power into the specified electrical load 41.

The controller 23 in the electrical energy storage 20 is configured to receive an instruction from an instruction provider 11 in the power supply control apparatus 10 to judge whether or not to feed the power into the electrical load 41. In the embodiment, an object of the power feed into the electrical load 41 from the electrical energy storage 20 is to reduce power to be received from the utility grid 51 in the building 40. Accordingly, the demand power on the utility grid 51 is to be reduced over the time period while the electrical energy storage 20 is feeding the power into the specified electrical load 41. Therefore, the centralized management device 210 or the like may instruct the instruction provider 11 to allow the electrical energy storage 20 to feed the power into the electrical load 41 when reducing demand power on the utility grid 51, etc.

The electrical energy storage 20 may be operated in order to feed the power into the electrical load 41 during a power failure or the like in which no power can be received from the utility grid 51. The electrical energy storage 20 may be cooperated with a dispersed power supply configured to generate renewable energy such as a photovoltaic power system in order that the electrical energy storage 20 feeds the power into the electrical load 41 over a time period while the dispersed power supply does not generate power. Technology to be explained below can be applied to those cases. However, the embodiment shows an example for reducing demand power on the utility grid 51.

One of the conditions for the instruction provider 11 requesting the electrical energy storage 20 to feed the power into the electrical load 41 is a target period requested from the centralized management device 210. Note that in the embodiment it is defined as a condition for allowing the electrical energy storage 20 to feed the power into the electrical load 41 only when the dweller is in the staying state, and for prohibiting the electrical energy storage 20 from feeding the power into the electrical load 41 when the dweller is in an absent state even within the target period. The staying state and the absent state are estimated by an estimator 13 as stated below. In the embodiment, the target period may be notified on one day prior to a start time of the target period or in the morning of this day, or notified just before the target period. The target period is specified by the centralized management device as the external device.

The power supply control apparatus 10 includes the judging module 12. The judging module 12 is configured to evaluate a combination of conditions by the target period requested from the centralized management device 210 and by the staying state or the absent state estimated with the estimator 13. For example, when the staying state is derived from the estimation by the estimator 13 within the target period, the judging module 12 may instruct the electrical energy storage 20 to feed the power into the electrical load 41 via the instruction provider 11. On the other hand, when the absent state is derived from the estimation by the estimator 13 within the target period, the judging module 12 may instruct the electrical energy storage 20 not to feed the power into the electrical load 41 via the instruction provider 11.

The aforementioned operation can prevent the electrical energy storage 20 from feeding the power to the electrical load 41 in the absent state, thereby preventing the reduction in remaining capacity of the storage battery 21 over a time period while the dweller is absent. On the other hand, it is possible to reduce demand power on the utility grid 51 by feeding power into the electrical load 41 from the electrical energy storage 20 in a time period while the dweller is present.

Incidentally, in the embodiment, the estimator 13 is configured to monitor power (hereinafter called "power consumption") consumed by the electrical load 41, thereby performing estimation of the staying state of the dweller and estimation of the absent state. Accordingly, the measuring device 30 in the building 40 is configured to measure and monitor the power consumption by the electrical load 41. In the embodiment, the measuring device 30 is configured to measure power consumption for each of the branch circuits 52. The measuring device 30 may be built in the distribution board 50, or be externally attached to the distribution board 50.

The estimation of the present state and the absent state of the dweller is possible by measuring the power consumption in the indoor main circuit 53. It is however possible to increase the precision of the estimation by measuring power consumption for each of the branch circuits 52 because information content is increased. Note that respective power consumption of the branch circuits 52 may be measured and monitored from any of the primary and secondary sides of the branch breakers.

The measuring device 30 includes a monitor 31 configured to monitor a current through each branch circuit 52, and a calculator 32 configured to calculate respective power consumption values of the branch circuits 52 based on each current value detected by the monitor 31 and a voltage value of the branch circuits 52.

The monitor 31 may have Rogowski coils or clamp current sensors. Each power consumption value calculated by the calculator 32 is a value obtained by dividing an integral power consumption value per unit time by the unit time in fact. The unit time is selected from, for example a range of one second to thirty minutes, desirably from 1 second, 10 seconds, 30 seconds, one minute and the like.

The power supply control apparatus 10 includes an acquirer 14 configured to acquire respective power consumption values of the branch circuits 52 through the measuring device 30. The power consumption values acquired from the measuring device 30 by the acquirer 14 are associated with respective absolute times (respective date and time), and data including the power consumption values and the absolute times combined with each other are stored in a storage 15. Each absolute time of a corresponding power consumption value may be measured by a clock 16 built in the power supply control apparatus 10. For example, the clock 16 may be a real time clock. In an example, the measuring device 30 may be configured to transmit the power consumption values calculated by the calculator 32 to the power supply control apparatus 10 via a communication unit.

The estimator 13 is configured to perform estimation of the staying state of the dweller and estimation of the absent state thereof based on the power consumption values stored in the storage 15. In order to perform the estimation of the staying state of the dweller and the estimation of the absent state thereof based on the transition of power consumption with the passage of time, the estimator 13 of the embodiment may be provided with classifications about life style, such as a going-out state in which the dweller is out and a sleep state in which the dweller is asleep. The staying state is a state in which the dweller is present in the building, and is not in the sleep state, because the power consumption of the electrical load 41 changes between in the sleep state and in a non-sleep state even when the dweller is present in the building. The going-out state and the sleep state are dealt as the absent state because the electrical load 41 is not operated in principle both in the going-out state and in the sleep state.

The estimator 13 may deal a transitional event from the staying state to the sleep state as a bedtime event; a transitional event from the sleep state to the staying state as a wake-up event; a transitional event from the staying state to the going-out state as a going-out event; and a transitional event from the going-out state to the staying state as a return home event. The estimator 13 classifying the staying state, the going-out state and sleep state as well as the bedtime event, the wake-up event, a going-out event and a return home event based on the transition of power consumption requires previously working out a correspondence between the transition of power consumption and each state by analyzing past power consumption values in advance.

The information of the transition of power consumption may contain content representing whether or not the electrical load 41 is in operation. Note that the electrical load 41 waiting to receive a remote control signal, etc. consumes power substantially even out of operation. Such power consumption by the electrical load 41 that is out of operation may be dealt as standby power consumption. Different kinds of electrical loads 41 may have respective different standby power consumption. The standby power consumption of a branch circuit 52 including two or more devices, connected to a branch circuit 52 varies according to a combination of devices in the electrical load 41.

It is therefore desirable to judge whether or not an electrical load 41 connected to each branch circuit 52 is in operation based on a threshold that is set every branch circuit 52 and larger than the standby power consumption thereof. For example, it may judge that the electrical load 41 is out of operation when the power consumption value is lower than the threshold. In order to set the threshold, the estimator 13 may set a temporary threshold to work out a minimum value in a range of temporary threshold, which satisfies a condition that a duration in which the power consumption value is equal to or lower than the temporary threshold exceeds a prescribed retention time. For example, the estimator 13 may set the temporary threshold to compare the power consumption value with the temporary threshold. When a duration in which the power consumption value is equal to or smaller than the temporary threshold exceeds the retention time, the estimator 13 may decrease the temporary threshold by a prescribed value to renew it. Subsequently, when a duration in which the power consumption value is equal to or smaller than the renewed temporary threshold exceeds the retention time, the estimator 13 may decrease the temporary threshold by the prescribed value again. By repeating such operations, when a duration in which the power consumption value is equal to or smaller than the renewed temporary threshold is equal to or smaller than the retention time, the estimator 13 may define the temporary threshold just prior to the renewed temporary threshold as the minimum value of the temporary threshold. That is, the aforementioned minimum value of the temporary threshold may be worked out by gradually decreasing the temporary threshold. The estimator 13 can judge whether or not the electrical load 41 is in operation based on the threshold defined by the minimum value of the temporary threshold. The threshold every branch circuit 52 defined as stated above corresponds to a maximum of the standby power consumption of a corresponding branch circuit 52.

The prior probability may be worked out as one of respective occurrence probabilities of three kinds of states such as the staying state, the going-out state and the sleep state in one day. The prior probabilities may be defined based on actual results, or statistically defined based on groups with similar dwellers and attributes. The prior probabilities of dweller's behavior may be defined as respective ratios of times for the staying state, the going-out state and the sleep state to one day. For example, if a time for the sleep state in one day is eight hours, the prior probability of the sleep state is 8/24 33.3%.

In case the prior probabilities are defined based on the actual results, respective behavior by the dweller of a target dwelling may be entered by the dweller during an appropriate measuring period defined in view of a variation caused by day of week, a seasonal variation or the like. In this case, the respective behavior may be entered through the operation of a specified device. For example, the going-out event or the return home event may be related to the open and close operation of an electric lock.

Examples of the dweller's attributes include occupation, age, residential region, family structure and the like. In case information on dweller's behavior is collected in a plurality of dwellings, the groups may be divided according to the attribute similarity and a prior probability may be worked out every group. Note that the groups may be divided according to prior probability similarity and dweller's attributes may be obtained from respective groups.

In addition, the first conditional probability every branch circuit 52 under each of the staying state, the going-out state and the sleep state may be worked out in advance, where the first conditional probability is a probability representing whether an electrical load 41 of a corresponding branch circuit 52 is in (or out of) operation. A probability representing that the electrical load 41 is in operation may be defined as a ratio of a time, in which the electrical load 41 is in operation, to a time for a corresponding state. For example, when a time for the sleep state is six hours and an operated time in the sleep state of the electrical load 41 connected to a specified branch circuit 52 is 3.6 hours, the first conditional probability is defined as 60%.

Working out the first conditional probabilities need respective times for the staying state, the going-out state and the sleep state. Accordingly, dweller's behavior may be entered during the appropriate measuring period. The dweller's behavior may be entered like the prior probabilities. In other words, when a prior probability is defied according to the entry by the dweller, the entry may be shared with the entry for working out the first conditional probability.

It is desirable that the first conditional probabilities be worked out by selecting branch circuits 52 with strong correlation between changes in power consumption and each of the staying state, the going-out state and the sleep state. For example, desirably a branch circuit(s) 52 which a refrigerator as an electrical load 41 is(are) connected to and has(have) weak correlation with the staying state, the going-out state and the sleep state may be excluded from targets for working out the first conditional probabilities.

The first conditional probabilities may be worked out as respective ratios of operational times, of branch circuits' 52 electrical loads 41, to the respective times for the staying state, the going-out state and the sleep state. The present embodiment is based on the second conditional probabilities in addition to the first conditional probabilities. Each second conditional probability may be worked out for each of time periods into which one day is divided. For example, under conditions of the staying state, the going-out state and the sleep state, respective probabilities of the states for each of the time periods may be worked out as the second conditional probabilities.

For example, when one day is divided into time periods, each of which is six hours, such as 0:00-6:00, 6:00-12:00, 12:00-18:00 and 18:00-24:00, respective ratios of times for the staying state, the going-out state and the sleep state are worked as the second conditional probabilities. Note that desirably the second conditional probabilities are also worked out through the entry by the dweller during an appropriate measuring period.

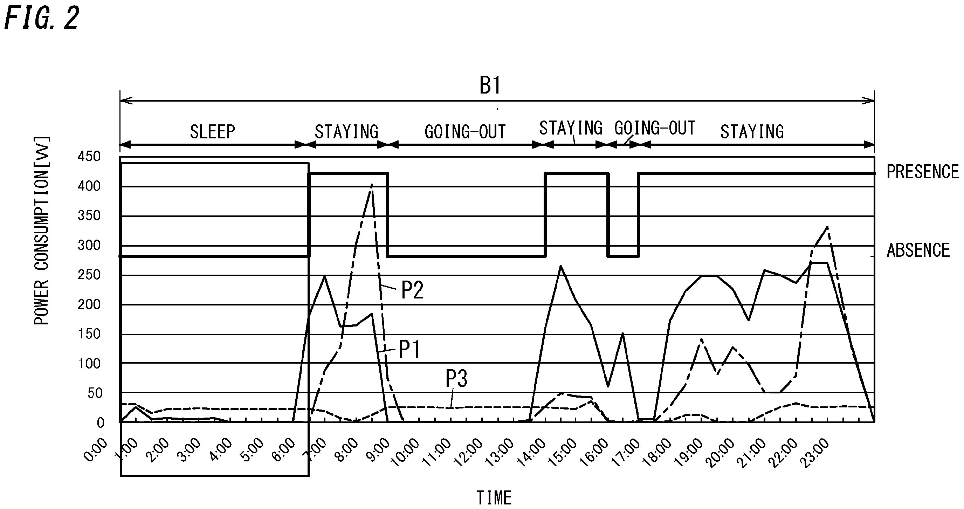

FIG. 2 illustrates respective behavior B1 by a dweller in one day and respective power consumption P1, P2 and P3 of branch circuits 52. FIG. 2 shows, as the respective behavior B1 by a dweller, three states of the staying state, the going-out state and the sleep state. FIG. 2 shows the power consumption P1 of a branch circuit 52 for a living room, the power consumption P2 of a branch circuit 52 for a kitchen and the power consumption P3 of a branch circuit 52 for a western-style room.

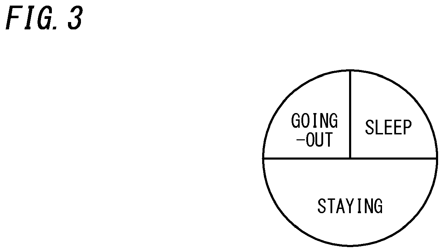

In the one day of the example shown in FIG. 2, a time for the staying state is 12 hours, a time for the going-out state is 6 hours, and a time for the sleep state is 6 hours, which can be represented by a circle graph as shown in FIG. 3. The staying state, the going-out state and the sleep state are respectively 50%, 25% and 25% which are respectively prior probabilities of the staying state, the going-out state and the sleep state.

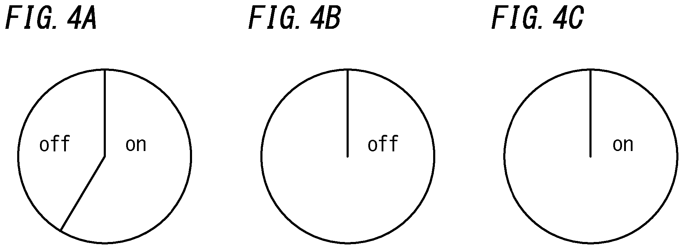

Respective operational times of electrical loads 41 of the branch circuits 52 corresponding to the respective states by dweller's behavior can be obtained based on the respective power consumption P1, P2 and P3 of the branch circuits 52. The respective ratios of the operational times to the respective states can be worked out as the first conditional probabilities. The time for the sleep state that is surrounded by a rectangle of FIG. 2 corresponds to FIGS. 4A to 4C. FIG. 4A shows a circle graph that represents an operation (On) state and a non-operation (Off) state of the electrical load 41 of the branch circuit 52 for the living room. FIG. 4B shows a circle graph that represents an operation (On) state and a non-operation (Off) state of the electrical load 41 of the branch circuit 52 for the kitchen. FIG. 4C shows a circle graph that represents an operation (On) state and a non-operation (Off) state of the electrical load 41 of the branch circuit 52 for the western-style room.

FIG. 4A shows ratios of the operation (On) state and the non-operation (Off) state of the electrical load 41 connected to the branch circuit 52 for the living room. The ratio of the time for the operation state is, for example 60% of the time for the sleep state. FIG. 4B shows ratios of the operation state and the non-operation state of the electrical load 41 connected to the branch circuit 52 for the kitchen, which is always in the non-operation state during the time for the sleep state. FIG. 4C shows ratios of the operation state and the non-operation state of the electrical load 41 connected to the branch circuit 52 for the western-style room, which is always in the operation state during the time for the sleep state. Therefore, in the example of FIG. 4, the first conditional probabilities, of respective electrical loads 41 in operation state under the condition, of the sleep state of the living room, the kitchen and the western-style room are 60%, 0% and 100%, respectively.

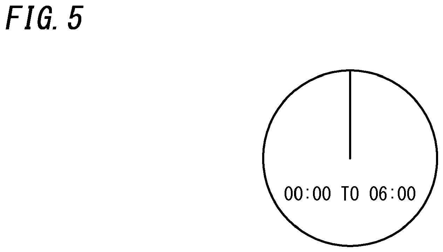

FIG. 5 is a circle graph showing a ratio of a time for the sleep state to the time period of 0:00-06:00, which is 100% in the example. That is, the example of FIG. 5 shows a 100% second conditional probability with respect to the sleep state. In the example of FIG. 2, there is no sleep state in the time periods of 06:00-12:00, 12:00-18:00 and 18:00-24:00, in each of which the second conditional probability with respect to the sleep state is 0%.

The prior probabilities, the first conditional probabilities and the second conditional probabilities may be worked out before the estimator 13 performs the estimation of the staying state and the estimation of the absent state, and then stored in the storage 15 in advance. In the case of initial introduction of the power supply control apparatus 10, the prior probabilities, the first conditional probabilities and the second conditional probabilities may be their respective initial values to be set by the dweller. In this case, they may be gradually modified according to data accumulation.

The estimator 13 can perform estimation of each of the staying state, the going-out state and the sleep state based on the transition of power consumption for each of branch circuits 52 in accordance with the procedures below. The estimation of each of the three states may be performed at appropriate intervals which may be set to regular intervals (selected from a range of one second to ten minutes, for example). In this example, the just previous state is known by the estimator 13. Based on respective power consumption values obtained from branch circuits 52 selected in advance, the estimator 13 may judge whether respective electrical loads 41 of the branch circuits 52 are in operation or out of operation.

The estimator 13 may collate the judgement result with the information of the storage 15, thereby working out a first conditional probability per branch circuit 52 corresponding to any of the staying state, the going-out state and the sleep state. In this case, the probabilities each of which is estimated as any of the staying state, the going-out state and the sleep state are worked out in accordance with whether respective electrical loads 41 of the branch circuits 52 are in operation or out of operation.

The estimator 13 may also collate an absolute time (date and time) measured by the clock 16 with the information of the storage 15, thereby working out second conditional probabilities each of which corresponds to any of the staying state, the going-out state and the sleep state. In this case, the estimator 13 may find a time period to which the absolute time measured by the clock 16 corresponds, and then work out respective occurrence probabilities of the staying state, the going-out state and the sleep state in the corresponding time period.

The estimator 13 may work out joint probabilities based on the respective prior probabilities of the staying state, the going-out state and the sleep state as well as the first conditional probability and the second conditional probability per branch circuit 52 obtained by the collation with the information of the storage 15. In this case, the estimator 13 may receive, as determinate information with respect to the Bayesian network, respective operations of the electrical loads 41 of the branch circuits 52 at an estimation time and a time period containing the estimation time. The estimator 13 may collate the determinate information with the information of the storage 15 to read the prior probabilities, the first conditional probabilities and the second conditional probabilities from the storage 15. The estimator 13 may further work out a joint probability of those probabilities.

The estimator 13 may work out respective joint probabilities of the staying state, the going-out state and the sleep state. In accordance with Bayes' theorem, the estimator 13 may work out respective probabilities corresponding to the present state, the going-out state and the sleep state based on three kinds of joint probabilities at the estimation time.

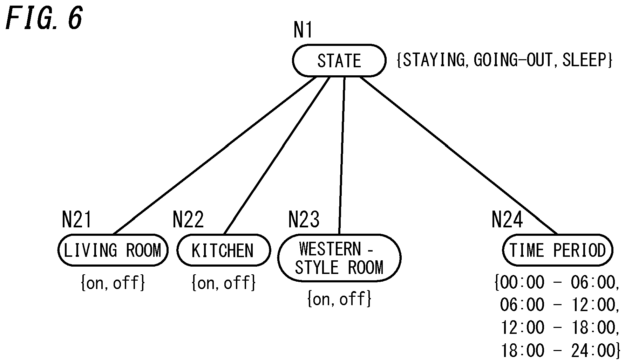

An calculation example of the respective probabilities corresponding to the staying state, the going-out state and the sleep state by the estimator 13 will be explained with reference to the Bayesian network shown in FIG. 6. In the example of FIG. 6, there are three kinds of states such as the staying state, the going-out state and the sleep state which can be obtained as a "state" node N1.

The node N1 is connected with nodes N21, N22 and N23 corresponding to three kinds of branch circuits 52. The node N21 corresponds to the branch circuit 52 for the living room. The node N22 corresponds to the branch circuit 52 for the kitchen. The node N23 corresponds to the branch circuit 52 for the western-style room. In each of the nodes N21, N22 and N23, there are two kinds of an operation (On) state and a non-operation (Off) state of a corresponding electrical load 41, as a value to be taken as input. In each of the nodes N21, N22 and N23, there are first conditional probabilities that are set as probabilities estimated as three kinds of states such as the staying state, the going-out state and the sleep state, as values to be taken as output.

The node N1 is also connected to a node N24 corresponding to time periods. In the node N24, there are four kinds of time periods of 00:00-06:00, 06:00-12:00, 12:00-18:00 and 18:00-24:00, as a value to be taken as input. In the node N24, there are second conditional probabilities that are set as occurrence probabilities of three kinds of states such as the staying state, the going-out state and the sleep state, as values to be taken as output.

In order to estimate that the state on an estimation time is any state of the staying state, the going-out state and the sleep state, the estimator 13 may read respective prior probabilities of the three kinds of states from the storage 15. The estimator 13 may also read first conditional probabilities from the storage 15 based on respective power consumption values of objective branch circuits 52, wherein the first conditional probabilities correspond to judgement results about whether respective electrical loads 41 of the branch circuits 52 are in operation or out of operation. The estimator 13 may further read, from the storage 15, second conditional probabilities corresponding a time period containing the estimation time.

The prior probabilities, the first conditional probabilities and the second conditional probabilities that are read from the storage 15 may be multiplied, and thereby joint probabilities that are occurrence probabilities of all the objective events may be worked out. Thus, the estimator 13 may work out respective joint probabilities of the staying state, the going-out state and the sleep state. In short, the estimator 13 may work out a joint probability to be estimated as the staying state, a joint probability to be estimated as the going-out state, and a joint probability to be estimated as the sleep state.

In an example, the joint probability to be estimated as the staying state is a1%, the joint probability to be estimated as the going-out state is a2%, and the joint probability to be estimated as the sleep state is a3%. In this example, the probability of the staying state is a1 / (a1 + a2 + a3), the probability of the going-out state is a2 / (a1 + a2 + a3), and the probability of the sleep state is a3 / (a1 + a2 + a3). The estimator 13 may estimate that the state at the estimation time is a state with a relatively high probability of the respective probabilities of the states worked out like that. For example, when the probability of the staying state is higher than the probability of the going-out state and the probability of the sleep state, it is estimated that the state at the estimation time is the staying state.

The estimator 13 may repeat such estimation at appropriate intervals to estimate dweller's behavior based on respective operations of electrical loads 41. The estimator 13 may also estimate respective change times from the staying state, the going-out state and the sleep state to other states, thereby estimating the wake-up event, the bedtime event, the going-out event and the return home event. Note that when there is no significant difference in the probabilities, the estimator 13 may judge that just previous state continues.

In the aforementioned operation, the estimator 13 estimates the state at the estimation time based on the prior probabilities, the first conditional probabilities and the second conditional probabilities. When the just previous state is estimated to be known, the estimation of the state may be performed in consideration of a transitional probability from the just previous state to the state at the estimation state.

There are nine kinds of combinations of transitional states because the three kinds of states such as the staying state, the going-out state and the sleep state are estimated and the states are estimated at appropriate intervals. That is, they include transitional cases from each of the staying state, the going-out state and the sleep state to an identical state and transitional cases from respective states to other states. Note that the transitional probability from the sleep state to the going-out state and the transitional probability from the going-out state to the sleep state may be 0% because the transition between the sleep state and the going-out state does not occur usually. The state transition may be therefore considered based on remaining seven kinds. The transitional probabilities may be worked out during an appropriate measuring period.

In case the joint probabilities are worked out in consideration of the transitional probabilities, the transitional probabilities may be transitional probabilities from the just previous states with respect to the estimation time. In this case, joint probabilities of respective states can be worked out by multiplying the prior probabilities by the transitional probabilities and then multiplying the first conditional probabilities corresponding to the operations of the electrical loads 41 and the second conditional probabilities corresponding to the time period containing the estimation time. The subsequent process is the same as the process without the transitional probabilities. Thus, respective occurrence probabilities of the staying state, the going-out state and the sleep state are worked out, and the state at the estimation time is estimated by relatively evaluating the values of the probabilities.

The estimation precision can be enhanced by estimating that the state at the estimation time is any of the staying state, the going-out state and the sleep state in consideration of the transitional probabilities because it is possible to exclude estimation results with low occurrence probabilities such as the transition between the going-out state and the sleep state.

In case the estimation result by the estimator 13 is different from the actual state, the embodiment may be configured so that the probability information stored in the storage 15 is renewed by dweller's teaching of the correct state. Providing such feedback with respect to the estimation result enables the renewal of the information stored in the storage 15 to enhance the estimation precision by the learning effect.

Incidentally, in the embodiment, the staying state is dealt as the present state, and the going-out state and the sleep state are dealt as the absent state. Therefore, the staying state as the estimation result by the estimator 13 is the present state, and the going-out state and the sleep state as the estimation results by the estimator 13 are the absent state. The estimation result of the present state or the absent state by the estimator 13 is given to the judging module 12.

As stated above, the judging module 12 prohibits the electrical energy storage 20 from feeding the power into the electrical load 41 in the case of the absent state within the target period while the electrical energy storage 20 is requested to feed the power into the electrical load 41. It is accordingly possible to prevent the reduction in remaining capacity of the storage battery 21 in the absent state. On the other hand, the judging module 12 allows the electrical energy storage 20 to feed the power to the electrical load 41 in the case of the staying state within the target period while the electrical energy storage 20 is requested to feed the power into the electrical load 41. It is accordingly possible to reduce electric energy received from the utility grid 51 without spoiling the convenience of the dweller.

As stated above, the power supply control apparatus 10 of the embodiment includes the judging module 12 and the estimator 13. The judging module 12 is configured to judge whether or not to allow the electrical energy storage 20 to feed its own power into the electrical load 41 within the target period while the electrical energy storage 20 in the building 40 is requested to feed the power into the electrical load 41. The estimator 13 is configured to perform estimation of the present state in which a user of the electrical load 41 is present in the building 40 and estimation of the absent state in which the user is absent from the building 40. The judging module 12 is configured to judge to allow the electrical energy storage 20 to feed the power when the present state is derived from the estimation by the estimator 13 within the target period, and to judge to prohibit the electrical energy storage 20 from feeding the power when the absent state is derived from the estimation by the estimator 13 within the target period.

With this configuration, it is possible to prohibit the electrical energy storage 20 from feeding the power into the electrical load 41 in a time period in which it is estimated that no user is present in the building 40, even within the target period while the electrical energy storage 20 is requested to feed the power into the electrical load 41. In such a building 40, the electrical energy storage 20 is prohibited from feeding the power into the electrical load 41 because there is a low possibility that the demand power on the utility grid 51 is reduced even if the electrical energy storage 20 feeds the power into the electrical load 41 when the building 40 in the absent state has a small power consumption value. It is consequently possible to suppress the reduction in remaining capacity of the electrical energy storage 20 in the absent state. On the other hand, in the building 40 in the present state, the electrical energy storage 20 is allowed to feed the power into the electrical load 41, and it is therefore possible to reduce the demand power on the utility grid 51 by the peak cut of the demand power.

It is desirable that the power supply control apparatus 10 include the acquirer 14 configured to acquire power consumption values from the measuring device 30 configured to measure power consumption in the building 40. In this configuration, the estimator 13 may be configured to perform the estimation of the present state and the estimation of the absent state based on the power consumption values acquired with the acquirer 14. The power consumption values vary between the present state and the absent state, and therefore the present state and the absent state can be estimated based on the change of the power consumption values. In case the HEMS controller is provided, the measuring device 30 configured to measure the power consumption values may be disposed along therewith. This example can perform the estimation of the present state and the estimation of the absent state without being provided with other sensors.

The measuring device 30 may be configured to measure respective power consumption values of branch circuits 52 divided in the distribution board 50 installed in the building. In this configuration, the estimator 13 may be configured to perform the estimation of the present state and the estimation of the absent based on the respective power consumption values of the branch circuits 52 acquired through the acquirer 14.

This configuration enables the estimation of the present state and the estimation of the absent state based on the respective power consumption values of branch circuits 52. It is accordingly possible to exclude a branch circuit(s) 52 which is(are) connected to an electrical load 41 containing a refrigerator, power consumption values of which have little relation to the present state and the absent state. It is therefore possible to choose branch circuits 52 suitable for the estimation of the present state and the estimation of the absent state based on the change of power consumption values thereof.

It is further preferable that the power supply control apparatus 10 include the storage 15 configured to store conditional probabilities (first conditional probabilities) under conditions of the present state or the absent state. The first conditional probabilities are occurrence probabilities of operations of the respective electrical loads 41 derived from respective power consumption values of the branch circuits 52. In this configuration, the estimator 13 may be configured to work out an occurrence probability of the present state and an occurrence probability of the absent state based on the conditional probabilities corresponding to the operations of the respective electrical loads 41 derived from the respective power consumption values of the branch circuits 52 acquired through the acquirer 14. The estimator 13 may be further configured to estimate a state with a relatively high probability of the present state and the absent state as a state at the estimation time.

In this configuration, an occurrence probability of the present state and an occurrence probability of the absent state are worked out based on the power consumption values. Therefore, the reliability of the estimation result can be more enhanced than the case where the present state and the absent state are defined deterministically. Leaning of the power supply control apparatus 10 by feedback of the actual present or absent state with respect to the estimation result by the estimator 13 enables further enhancement of the precision of the estimation.

It is also desirable that the power supply control apparatus 10 include the storage 15 configured to store the first conditional probabilities and the second conditional probabilities. The first conditional probabilities are occurrence probabilities of the operations of respective electrical loads 41 derived from respective power consumption values of branch circuits 52 under the conditions of the present state or the absent state. The second conditional probabilities are occurrence probabilities of the present state or the absent state in each of time periods into which one day is divided. The estimator 13 may be configured to work out the occurrence probability of the present state and the occurrence probability of the absent state based on the first conditional probabilities corresponding to the operations of the respective electrical loads 41 derived from the respective power consumption values of the branch circuits 52 acquired through the acquirer 14 and the second conditional probabilities in a time period(s), to which the target period belongs, of the time periods. The estimator 13 may be further configured to estimate a state with a relatively high probability of the present state and the absent state as a state at the estimation time.

A power supply control system of the embodiment includes individual management devices 110 each of which is disposed in a building 40, and the centralized management device 210 having a function configured to communicate with the individual management devices 110 and designate a target period. Each of the individual management devices 110 may include a power supply control apparatus 10.

In this configuration, each individual management device 110 is to autonomously perform the estimation of the present state and the estimation of the absent state. It is therefore possible to suppress the increase in processing load of the centralized management device 210. The increase in communication traffic can be also reduced because the centralized management device 210 simply notifies the individual management devices 110 of the target period.

A program of the embodiment allows a computer to function as the aforementioned power supply control apparatus 10.

### (Embodiment 2)

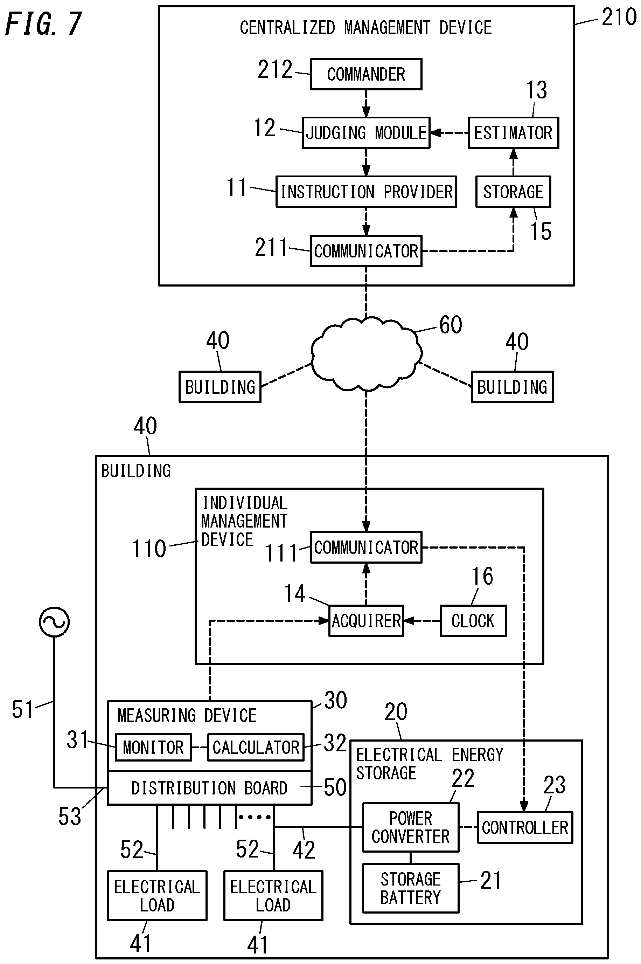

Embodiment 1 shows the configuration example in which the power supply control apparatus 10 is installed in the housing 40. However, the configuration of the power supply control apparatus 10 may be divided into the individual management device 110 and the centralized management device 210. As shown in FIG. 7, in the present embodiment, an individual management device 110 is provided with an acquirer 14, a clock 16 and a communicator 111. The remaining components of the configuration of the power supply control apparatus 10 are provided in a centralized management device 210. This configuration example will be explained. Note that any components of the power supply control apparatus 10 may be appropriately provided for any of the individual management device 110 and the centralized management device 210.

In the embodiment, respective power consumption values of branch circuits 52 acquired through the acquirer 14 from a measuring device 30 are associated with respective absolute times (respective date and time) measured with the clock 16. The centralized management device 210 is configured to acquire, through the communicator 111 and a communicator 211, the respective power consumption values of the branch circuits 52 measured in a building 40, and the respective absolute times.

The centralized management device 210 includes a storage 15 included in a power supply control apparatus 10. The storage 15 is configured to store the respective power consumption values of the branch circuits 52 acquired through the acquirer 14, and the respective absolute times measured with the clock 16. The storage 15 may store, as attributes per building 40, prior probabilities, first conditional probabilities and second conditional probabilities in advance. Note that the storage 15 may further store transitional probabilities if need be.

The centralized management device 210 further includes an estimator 13, a judging module 12 and an instruction provider 11 that are included in the power supply control apparatus 10. The estimator 13 has a function configured to perform estimation of a staying state, estimation of a going-out state and estimation of a sleep state in each building 40 based on transition of power consumption stored in the storage 15, like the estimator 13 of Embodiment 1. The judging module 12 is configured to judge whether or not to allow an electrical energy storage 20 to feed its own power into an electrical load 41 in accordance with an estimation result by the estimator 13, and to give an instruction to the electrical energy storage 20 via the instruction provider 11 when judging to allow the electrical energy storage 20 to feed the power into the electrical load 41.

Timing of the instruction to allow the electrical energy storage 20 to feed the power into the electrical load 41 may be determined by a commander 212 provided in the centralized management device 210. For example, the commander 212 may request the electrical energy storage 20 installed in the building 40 to feed the power into the electrical load 41 within a target period while demand power on a utility grid 51 needs to be reduced.

The judging module 12 may judge that the electrical energy storage 20 doesn't need to feed the power into the electrical load 41 when the estimation result by the estimator 13 represents the absent state even within the target period while the commander 212 is requesting the electrical energy storage 20 to feed the power. That is, even if it is necessary to suppress the demand power on the utility grid 51, the power consumption in the building 40, dwellers of which are absent, has a small value. Accordingly, the judging module 12 may judge that a contribution ratio by the reduction of the demand power is low, and not request the electrical energy storage 20 in the building 40 in the absent state to feed the power. This configuration enables the suppression of the occurrence of unnecessary communication, and narrowing electrical energy storages 20 to be instructed to feed their own power into respective electrical loads 41.

The judging module 12 may also judge that the electrical energy storage 20 in a corresponding building 40 needs to feed the power into the electrical load 41 when the estimation result by the estimator 13 represents a present state within the target period while the commander 212 is requesting the electrical energy storage 20 to feed the power. In this case, the instruction provider 11 may give an instruction according to the judgment result by the judging module 12 to the electrical energy storage 20 via the communicator 211 and the communicator 111. That is, the electrical energy storage 20 may feed the power into the electrical load 41 according to the instruction. Other configuration and operation are similar to those of Embodiment 1.

The configuration of Embodiment 1 can reduce the processing load of the centralized management device 210 because the individual management device 110 autonomously judges whether or not to allow the electrical energy storage 20 to feed the power into the electrical load 41 when receiving the instruction from the centralized management device 210. The communication load can be also reduced because the electrical energy storage 20 is requested to feed the power into the electrical load 41 only by the communication to be generated between the centralized management device 210 and the individual management device 110.

On the other hand, the configuration of Embodiment 2 can suppress the increase in processing load of the individual management device 110, thereby realizing the individual management device 110 by a device with a comparatively low processing capacity because the centralized management device 210 is to perform the processing for the estimation of the present state and the estimation of the absent state based on the power consumption values. That is, it is possible to suppress the increase in cost of the individual management device 110 installed in each building 40. As a result, the increase in overall cost of the system can be suppressed.

The power supply control system of the embodiment as stated above may include the individual management devices 110 each of which is disposed in a building 40, and the centralized management device 210 configured to communicated with the individual management devices 110. Each of the individual management devices 110 may include the acquirer 14 configured to acquire power consumption values from a corresponding measuring device 20 configured to measure power consumption in a corresponding building 40. The centralized management device 210 may also include the judging module 12 and the estimator 13.

The judging module 12 may be configured to, within the target period while respective electrical energy storages 20 in the buildings 40 are requested to feed their own power into respective corresponding electrical loads 41, judge whether or not to allow the respective electrical energy storages 20 to feed the power into the respective corresponding electrical loads 41. The estimator 13 may be configured to, based on the power consumption values acquired with each acquirer 14, perform estimation of the present state in which a user of a corresponding electrical load 41 is present in a corresponding building 40 and estimation of the absent state in which the user is absent from the building 40. The judging module 12 may be configured: to, when the present state is derived from the estimation by the estimator 13 within the target period, judge to allow one of more corresponding electrical energy storages 20 to feed their own power; and to, when the absent state is derived from the estimation by the estimator 13 within the target period, judge to prohibit one or more corresponding electrical energy storages 20 from feeding their own power.

This configuration can prohibit the electrical energy storage 20 from feeding the power into the electrical load 41 over a time period while it is estimated that no user is present in the building 40, even within the target period while the electrical energy storage 20 is requested to feed the power into the electrical load 41. In such a building 40, the electrical energy storage 20 is prohibited from feeding the power into the electrical load 41 because there is a low possibility that the demand power on the utility grid 51 is reduced even if the electrical energy storage 20 feeds the power into the electrical load 41 when the building 40 in the absent state has a small power consumption value. It is consequently possible to suppress the reduction in remaining capacity of the electrical energy storage 20 in the absent state. On the other hand, in the building 40 in the present state, the electrical energy storage 20 is allowed to feed the power into the electrical load 41, and it is therefore possible to reduce the demand power on the utility grid 51 by the peak cut of the demand power.

In addition, respective processing loads of the individual management devices 110 can be reduced because the centralized management device 210 collects power consumption values and then performs the estimation of the present state and the estimation of the absent state. Moreover, the communication traffic volume can be reduced because when a building 40 is in the absent state even within the target period, a corresponding individual management device 110 is not requested to allow the electrical energy storage 20 to feed the power into the electrical load 41.

The aforementioned embodiments are just examples of the present invention. Therefore, the invention is not limited to the embodiments. Various modifications other than the embodiments can be made according to design or the like without departing from the true scope of the present invention.

## Claims

**1.** A power supply control apparatus, comprising:
an estimator configured to perform estimation of a present state in which a user of an electrical load is present in a building and estimation of an absent state in which the user is absent from the building;
a judging module configured to judge whether or not to allow an electrical energy storage in the building to feed its own power into the electrical load within a target period while the electrical energy storage is requested to feed the power into the electrical load,
the judging module being configured:
to judge to allow the electrical energy storage to feed the power when the present state is derived from the estimation by the estimator within the target period; and
to judge to prohibit the electrical energy storage from feeding the power when the absent state is derived from the estimation by the estimator within the target period.

**2.** The power supply control apparatus of claim 1, further comprising an acquirer configured to acquire power consumption values from a measuring device configured to measure power consumption in the building, wherein
the estimator is configured to perform the estimation of the present state and the estimation of the absent state based on the power consumption values acquired with the acquirer.

**3.** The power supply control apparatus of claim 2, wherein:
the measuring device is configured to measure respective power consumption values of branch circuits divided in a distribution board installed in the building; and
the estimator is configured to perform the estimation of the present state and the estimation of the absent state based of the respective power consumption values of the branch circuits acquired through the acquirer.

**4.** The power supply control apparatus of claim 3, further comprising a storage configured to store conditional probabilities under conditions of the present state or the absent state, the conditional probabilities being occurrence probabilities of operations of the respective electrical loads derived from respective power consumption values of the branch circuits, wherein
the estimator is configured to
work out an occurrence probability of the present state and an occurrence probability of the absent state based on the conditional probabilities corresponding to the operations of the respective electrical loads derived from the respective power consumption values of the branch circuits acquired through the acquirer, and
estimate a state with a relatively high probability of the present state and the absent state as a state at an estimation time.

**5.** A power supply control system, comprising:
individual management devices each of which is disposed in a building; and
a centralized management device having a function configured to communicate with the individual management devices and designate a target period, wherein
each of the individual management devices comprises a power supply control apparatus of any one of claims 1 to 4.

**6.** A power supply control system, comprising:
individual management devices each of which is disposed in a building, each of the individual management devices comprising an acquirer configured to acquire power consumption values from a corresponding measuring device configured to measure power consumption in a corresponding building; and
a centralized management device configured to communicate with the individual management devices,
the centralized management device comprising:
an estimator configured to, based on the power consumption values acquired with each acquirer, perform estimation of a present state in which a user of a corresponding electrical load is present in a corresponding building and estimation of an absent state in which the user is absent from the building; and
a judging module configured to, within a target period while respective electrical energy storages in the buildings are requested to feed their own power into respective corresponding electrical loads, judge whether or not to allow the respective electrical energy storages to feed their own power into the respective corresponding electrical loads,
the judging module being configured:
to, when the present state is derived from the estimation by the estimator within the target period, judge to allow one or more corresponding electrical energy storages to feed their own power; and
to, when the absent state is derived from the estimation by the estimator within the target period, judge to prohibit one or more corresponding electrical energy storages from feeding their own power.

**6.** A program for allowing a computer to function as a power supply control apparatus of any one of claims 1 to 4.

## Amended claims

### Amended claims under Art. 19.1 PCT

**1.** (Amended) A power supply control apparatus, comprising:
an estimator configured to perform estimation of a present state in which a user of an electrical load is present in a building and estimation of an absent state in which the user is absent from the building;
a judging module configured to judge whether or not to allow an electrical energy storage in the building to feed its own power into the electrical load within a target period while the electrical energy storage is requested to feed the power into the electrical load;
an acquirer configured to acquire power consumption values from a measuring device configured to measure respective power consumption values of branch circuits divided in a distribution board installed in the building; and
a storage configured to store conditional probabilities under conditions of the present state or the absent state, the conditional probabilities being occurrence probabilities of operations of the respective electrical loads derived from respective power consumption values of the branch circuits, wherein:
the estimator is configured
to work out an occurrence probability of the present state and an occurrence probability of the absent state based on the conditional probabilities corresponding to the operations of the respective electrical loads derived from the respective power consumption values of the branch circuits acquired through the acquirer, and
to estimate a state with a relatively high probability of the present state and the absent state as a state at an estimation time; and
the judging module is configured
to judge to allow the electrical energy storage to feed the power when the present state is derived from the estimation by the estimator within the target period, and
to judge to prohibit the electrical energy storage from feeding the power when the absent state is derived from the estimation by the estimator within the target period.

**2.** (Amended) A power supply control system, comprising:
individual management devices each of which is disposed in a building; and
a centralized management device having a function configured to communicate with the individual management devices and designate a target period, wherein
each of the individual management devices comprises a power supply control apparatus of claim 1.

**3.** (Amended) A power supply control system, comprising:
individual management devices each of which is disposed in a building, each of the individual management devices comprising an acquirer configured to acquire power consumption values from a corresponding measuring device configured to measure power consumption in a corresponding building; and
a centralized management device configured to communicate with the individual management devices,
the centralized management device comprising:
an estimator configured to, based on the power consumption values acquired with each acquirer, perform estimation of a present state in which a user of a corresponding electrical load is present in a corresponding building and estimation of an absent state in which the user is absent from the building;
a judging module configured to, within a target period while respective electrical energy storages in the buildings are requested to feed their own power into respective corresponding electrical loads, judge whether or not to allow the respective electrical energy storages to feed their own power into the respective corresponding electrical loads; and
a storage configured to store conditional probabilities under conditions of the present state or the absent state, the conditional probabilities being occurrence probabilities of operations of the respective electrical loads derived from respective power consumption values of the branch circuits,
wherein:
the estimator is configured
to work out an occurrence probability of the present state and an occurrence probability of the absent state based on the conditional probabilities corresponding to the operations of the respective electrical loads derived from the respective power consumption values of the branch circuits acquired through the acquirer, and
to estimate a state with a relatively high probability of the present state and the absent state as a state at an estimation time; and
the judging module being configured
to, when the present state is derived from the estimation by the estimator within the target period, judge to allow one or more corresponding electrical energy storages to feed their own power, and
to, when the absent state is derived from the estimation by the estimator within the target period, judge to prohibit one or more corresponding electrical energy storages from feeding their own power.

**4.** (Amended) A program for allowing a computer to function as a power supply control apparatus of claim 1.

**5.** (Canceled)

**6.** (Canceled)

**7.** (Canceled)
